# EUROPÄISCHE PATENTSCHRIFT

(11) **EP 3 755 506 B1**
(45) Veröffentlichungstag und Bekanntmachung des Hinweises auf die Patenterteilung: **18.05.2022**
(21) Anmeldenummer: 19710609.9
(22) Anmeldetag: 20.02.2019
(51) Int. Cl.: B25J 11/00, B65G 47/90, B25J 9/00, A23G 1/00, A23G 1/26

(54) **ANLAGE ZUM HERSTELLEN VON VERZEHRGUT**
PLANT FOR PRODUCING A FOODSTUFF
INSTALLATION POUR PRODUIRE UN PRODUIT COMESTIBLE

(30) Priorität: 20.02.2018 DE 102018103736
(43) Veröffentlichungstag der Anmeldung: 30.12.2020
(73) Patentinhaber: KNOBEL, Guido, 8268 Salenstein (CH)
(72) Erfinder: KNOBEL, Guido, 8268 Salenstein (CH)
(74) Vertreter: Patentanwälte und Rechtsanwalt Weiß, Arat & Partner mbB
(86) Internationale Anmeldenummer: PCT/EP2019/054241
(87) Internationale Veröffentlichungsnummer: WO 2019/162341

(56) Entgegenhaltungen:
- EP-A1- 3 038 472
- EP-A1- 3 111 768
- EP-B1- 3 038 472
- GB-A- 2 070 501
- US-A1- 2017 049 122
- US-B1- 6 327 969

## Beschreibung

Die Erfindung betrifft eine Anlage zum Herstellen von Verzehrgut, insbesondere von einem Schokoladenartikel, in zumindest einer Form, die vor und/oder nach dem Einfüllen des Verzehrgutes in zumindest einer Bearbeitungsstation temperierbar ist, wobei die Form in oder an der Bearbeitungsstation von einem Roboter übernommen und zum Temperieren abgelegt wird.

### Stand der Technik

Anlagen der o.g. Art sind in vielfältiger Form und Ausführung bekannt und auf dem Markt. Durch sie wird eine Vielzahl von Verzehrgütern hergestellt. Im vorliegenden Fall geht es vor allem um ein Verzehrgut aus Schokolade.

Die Herstellung von Schokolade geschieht in der Regel in Formen, die eine Vielzahl von Formnester bzw. Ausnehmungen aufweisen, in welche flüssige Schokolade eingegossen wird. Dies geschieht oftmals mit einer Giessmaschine, in der beispielsweise Pralinen aus zwei unterschiedlichen Schokoladen bzw. unterschiedlichen Grundsubstanzen hergestellt werden. Die Giessmaschine ist aber nur beispielhaft genannt. Es gibt im Stand der Technik viele weitere Vorrichtungen zum Konfigurieren von Verzehrgut, insbesondere Schokoladenmassen.

In vielen Fällen ist es ratsam, eine Form, in die flüssige Schokolade eingefüllt werden soll, vorher zu erwärmen. Damit wird gewährleistet, dass nicht sofort eine Aussenhaut des hergestellten Verzehrgutes in einer kalten Form erstarrt, während das Innere noch flüssig ist. Die Erstarrung sollte möglichst gleichmässig erfolgen. Aus diesem Grunde ist beispielsweise einer Giessmaschine aber auch anderen Einfüllmaschinen für Verzehrgut eine Vorwärmzelle vorgeschaltet.

Zum möglichste geregelten Verfestigen des Verzehrgutes, insbesondere der Schokolade, ist der Giessmaschine oder einer dgl. Formeinrichtungen meist eine Kühlzelle nachgeordnet. In dieser Kühlzelle werden die Formen möglichst gleichmässig gekühlt, damit das bis dahin flüssige Verzehrgut erstarren kann und möglichst weitgehend aushärtet, damit es bei einem späteren Handling nicht verformt wird. In der EP 3 038 472 A1 bzw. WO 2015/063629 werden hierzu die Formen auf einer Ablage abgelegt.

Der Transport zwischen den einzelnen Bearbeitungsstationen geschieht in der Regel mittels Förderbändern. Aber auch der Transport durch die Vorwärmzellen und/oder die Kühlzellen geschieht mittels entsprechenden Förderbändern. Beispielsweise ist in der EP 1 011 345 B1 (US 6 327 969 A) eine derartige Vorrichtung als Wendelförderer beschrieben. Dieser Wendelförderer umfängt einen Zylinder, wobei die entsprechenden Formen an Luftöffnungen vorbei geführt werden, aus denen Luft aus dem Innern des Zylinders ausströmt. Der Zylinder ist oben abgedeckt. In den Zylinder bzw. in dessen Innenraum strömt von unten her die Luft ein, die dann aus den Luftöffnungen ausströmt und die Formen aufwärmt oder kühlt.

Derartige Wendelförderer haben sich in der Praxis bewährt, sind aber relativ teuer, konstruktionsmässig aufwendig und wenig flexibel.

Aus diesem Grunde werden in vielen Fällen auch Handlinggeräte eingesetzt. Beispielsweise ist in der EP 2 051 919 B1 oder der EP 3 111 768 A1 ein entsprechender Roboter zum Handling von Gegenständen, insbesondere von Formen beim Herstellen von Schokoladenartikel gezeigt. Dort wird auch darauf hingewiesen, dass handelsübliche Roboter dazu benutzt werden, Konfiserieartikel, welche üblicherweise in Mehrfachformen hergestellt werden, zum Aushärten in eine Bearbeitungsstation zu bewegen. Diese handelsüblichen Roboter, die mit Hydraulik oder Pneumatik arbeiten, begegnen aber hygienischen Bedenken. Ferner lässt die Geschwindigkeit von derartigen Hydraulikrobotern sehr zu wünschen übrig und auch deren Genauigkeit. Aus diesem Grunde ist in der EP 2 051 919 B1 ein ausschliesslich mechanisch bewegter Roboter beschrieben.

In der GB 2 070 501 A wird lediglich eine Form gezeigt, bei der runde Formen in einem Träger angeordnet sind und mit dem Träger eine Zuleitung und eine Abführleitung verbunden ist, welche die Zirkulation eines Kühlmittels, bspw. von Freongas, erlaubt. Das bedeutet, dass in dem Träger eine Kühlung der Form seitlich und von unten her erfolgt, nicht jedoch von oben.

Die US 2017/049122 A1 beschreibt eine Vorrichtung derart, wie sie auch bei der vorliegenden Erfindung im Oberbegriff beansprucht wird. Es sind Formen gezeigt, die auf einem Förderband durch eine Kühlkammer transportiert werden. Dabei ruht die Form auf Stützfüsschen oder Stützstreifen, so dass zwischen der Form und dem Transportband ein freier Raum entsteht. Sofern zwei Transportbänder übereinander angeordnet sind, ist ein Liftsystem vorgesehen, mit welchem die Form von einem Transportband zum anderen Transportband angehoben werden kann.

Wenig Augenmerk im Stand der Technik wird bislang auf die Vorwärmstation bzw. Kühlstation selbst gerichtet. Gerade deren gleichmässige und für die Form umfassende Wirkungsweise ist aber für die Herstellung des Verzehrgutes und insbesondere der Schokoladenartikel von sehr grosser Bedeutung.

### Aufgabe der Erfindung

Die vorliegende Erfindung ist auf die Behandlung des Verzehrguts in der Vorwärmzelle bzw. Kühlstation gerichtet, wobei vor allem die Form so umfassend wie möglich und so gleichmässig wie möglich temperiert werden soll, damit die Bedingungen zum Erwärmen bzw. Abkühlen an jeder Stelle der Form möglichst gleichmässig sind. Dabei gilt es vor allem ein Augenmerk auf die Randbereiche im Verhältnis zum Zentrum der Form zu richten, damit vermieden wird, dass die Randbereiche schneller erwärmt bzw. abgekühlt werden, als das Zentrum. Das Temperieren der Form soll weitgehend vergleichmässigt werden.

### Lösung der Aufgabe

Zur Lösung der Aufgabe führt, dass in der Bearbeitungsstation einzelne, getrennte Ablagen für die Formen an einer Wand vorgesehen sind, sich unterhalb und/oder oberhalb der Ablagen in der Wand Schlitze zum Ausbringen eines Temperiermediums befinden und in den Ablagen ein Temperiermedium geführt ist.

Im Gegensatz zu den bekannten Wendelförderern liegt erfindungsgemäss die zu temperierende Form nicht vollflächig mit dem Formboden auf einem flächigen Förderelement auf, sondern befindet sich auf Ablagen, welche die Formen so wenig wie möglich berühren bzw. Formbereiche so wenig wie möglich abdecken. Aus diesem Grunde gehen die Ablagen mit der Form auch nur eine punkt- oder linienförmige Berührung ein, in den übrigen Bereichen ist die Form ungehindert dem Temperiermedium ausgesetzt. Damit wird gewährleistet, dass das Temperiermedium die Form quasi von allen Seiten in gleichem Masse beaufschlagen kann, so dass die gesamte Temperierung über die gesamte Form hin gleichmässig ist.

In einem bevorzugten Ausführungsbeispiel sollen die Ablagen U-förmig ausgebildet sein und von der Wand abragen. Beispielsweise bieten sich entsprechend gekrümmte Rohre an, da diese zudem ermöglichen, dass ein Temperiermedium in ihnen geführt wird. Auf diese Weise wird gewährleistet, dass auch die Berührungspunkte bzw. Berührungslinien zwischen Ablage und Form dem umgebenden Temperiermedium angeglichen werden, so dass auch an diesen Berührungsstellen ein gleichmässiges Temperieren der Form erfolgt.

Die Ablagen sind bevorzugt so ausgestaltet bzw. der Form angepasst, dass die Form entweder auf einer Ablage liegt oder zwischen zwei benachbarten Ablagen hängt.

Ein weiterer Gedanke der vorliegenden Erfindung bezieht sich darauf, dass sich in der oben erwähnten Wand, von welcher die Ablagen abragen, Öffnungen beliebiger geometrischer Figur, insbesondere Schlitze, befinden. Diese dienen dazu, ein Temperiermedium zu den Ablagen zu führen. Denkbar ist auch, dass ein Temperiermedium aus den Schlitzen abgesaugt wird. Wichtig ist allein, dass ein gewisser Strom eines Temperiermediums stattfindet. Dies kann unter Über- oder unter Unterdruck geschehen.

Der entsprechenden Bearbeitungsstation, sei es Vorwärmzelle oder Kühlzelle, sind natürlich entsprechende Aggregate zugeordnet, die das Medium, welches zu den Ablagen geführt wird, temperieren.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Gesamtansicht einer erfindungsgemässen Anlage zum Herstellen von Verzehrgut;
Figur 2 eine schematisch dargestellte Draufsicht auf eine Bearbeitungsstation der Anlage gemäss Figur 1;
Figur 3 eine schematisch dargestellte Frontansicht einer Bearbeitungsstation in der Anlage gemäss Figur 1.

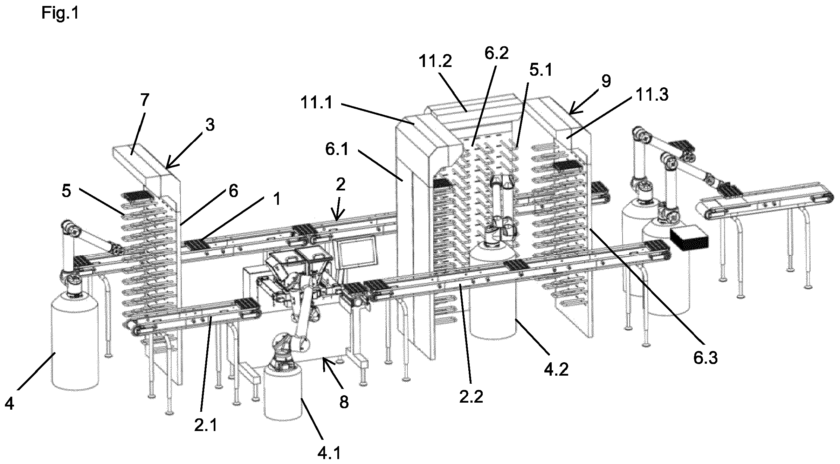

Eine Anlage zum Herstellen eines Verzehrgutes weist gemäss Figur 1 verschiedene Bearbeitungsstationen auf, zwischen denen Formen 1 zum Herstellen eines Verzehrgutes transportiert werden. Der Transport geschieht auf einer Reihe von Transportbändern 2.

Als erstes gelangt die Form 1 zu einer Vorwärmzelle 3, in der die Formen 1 vorgewärmt werden. Hierzu wird die Form 1 von einem Roboter 4 vom Transportband 2 abgenommen und auf Ablagen 5 in der Vorwärmzelle 3 abgelegt. Der Einfachheit halber weist die Vorwärmzelle 3 eine Wand 6 auf, von der die Ablagen 5 abragen. Im gezeigten Ausführungsbeispiel sind die Ablagen 5 als U-förmige Rohre ausgestaltet, wie sie weiter unten näher beschrieben werden. Oberhalb der Ablagen 5 befindet sich ein Aggregat 7 zur Zuführung von Wärme auf die Formen 1 bzw. zu den Ablagen 5.

Der Roboter 4 nimmt die erwärmte Form 1 wieder von den Ablagen 5 ab und legt sie auf ein nachfolgendes Transportband 2.1. Durch dieses Transportband 2.1 werden die Formen zu einer Giessmaschine 8 transportiert. Dort nimmt ein weiterer Roboter 4.1 die Form von dem Transportband 2.1 und legt sie in die Giessmaschine 8. In der Giessmaschine 8 wird die Form 1 bzw. entsprechende Ausnehmungen/Kavitäten in der Form 1 mit flüssigem Verzehrgut, beispielsweise Schokolade, gefüllt.

Nach Befüllen der Form 1 nimmt der Roboter 4.1 die gefüllte Form 1 wieder aus der Giessmaschine 8 und legt sie auf ein weiteres Transportband 2.2. Dieses Transportband 2.2 führt zu einer Kühlzelle 9, in der die gefüllten Formen 1 gekühlt werden. Hierzu nimmt ein weiterer Roboter 4.2 die Formen 1 vom Transportband 2.2 ab und legt sie auf Ablagen 5.1 in der Kühlzelle 9, wie dies später noch beschrieben wird.

Nach dem geeigneten Abkühlen der Formen 1 nimmt der Roboter 4.2 die Formen von den Ablagen 5.1 und legt sie wieder auf das Transportband 2.2, durch das die Formen zur weiteren Be- bzw. Verarbeitung transportiert werden.

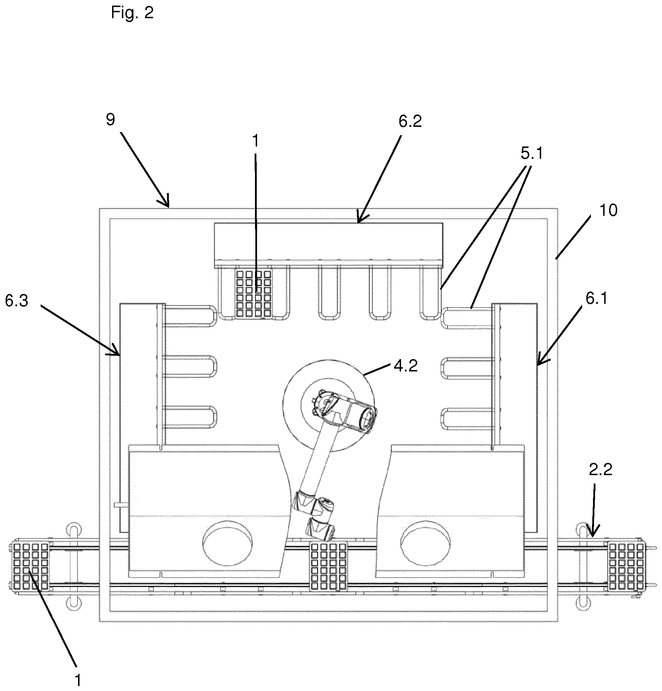

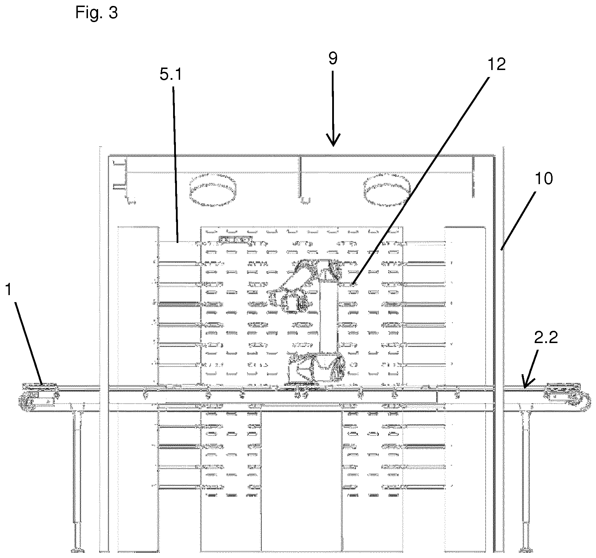

Gemäss den Figuren 2 und 3 ist die Kühlzelle 9 von einem Gehäuse 10 eingeschlossen. Das Gehäuse 10 wird von dem Transportband 2.2 durchzogen, auf dem sich die Form 1 befindet.

Der Roboter 4.2 ist von drei identisch ausgestalteten Wänden 6.1, 6.2 und 6.3 umgeben. Aus jeder Wand 6.1, 6.2 und 6.3 ragt eine Vielzahl von Ablagen 5, welche als gebogene Rohre ausgebildet sind. In diesen gebogenen Rohren 5 kann beispielsweise ein Temperiermedium geführt werden. Im Falle der Ablage 5 in der Vorwärmzelle 3 handelt es sich um ein Wärmemedium, im Falle der Ablage 5.1 in der Kühlzelle 9 handelt es sich um ein Kühlmedium.

Den Wänden 6.1, 6.2 und 6.3 ist jeweils ein Kühlaggregat 11.1, 11.2 und 11.3 aufgesetzt, aus dem beispielsweise kühlende Luft ausgebracht wird, die auf die Formen 1 auf den Ablagen 5.1 fällt.

Erfindungsgemäss sind aber auch in die Wände 6.1, 6.2 und 6.3 insbesondere zwischen den Ablagen 5.1 Schlitze 12 eingeformt, durch die ein Kühlmedium, insbesondere Kühlluft auf bzw. unter die Formen 1 auf den Ablagen 5.1 aufgebracht wird.

Die Funktionsweise der vorliegenden Erfindung ist folgende:
Auf dem Transportband 2 werden leere Formen 1 zu der Vorwärmzelle 3 geführt. Der Roboter 4 nimmt die leere Form 1 von dem Transportband 2 ab und legt sie auf Ablagen 5 in der Vorwärmzelle 3, welche von der Wand 6 abragen. Dabei werden die Formen 1 so auf die Ablagen 5 aufgelegt, dass die Auflage nur punkt- oder linienförmig geschieht, so dass ein möglichst grosser Bereich der Form einem Wärmemedium ausgesetzt ist, ohne dass es durch eine flächige Ablage abgeschirmt wäre. Insbesondere geschieht das Ablegen der Form 1 zwischen zwei rohrförmig gebogenen Ablagen, so dass die Form 1 jeweils auf einem geraden Rohrteil der beiden benachbarten Ablagen 5 aufliegt. Allerdings können auch die Ablagen 5 selbst entsprechend der Geometrie der Form 1 ausgestaltet sein, so dass eine Form auch auf einer Ablage linienförmig aufliegt.

Sobald die Formen entsprechend vorgewärmt sind, werden sie wieder von dem Roboter 4 abgenommen und auf das Transportband 2.1 aufgelegt, welches die Form 1 zur Giessmaschine führt. Dort wird das entsprechende Verzehrgut in die Ausnehmungen in der Form 1 eingegeben, so dass die Form nunmehr gefüllt ist.

Diese gefüllte Form wird von dem Roboter 4.1 aus der Giessmaschine 8 entnommen und auf das Transportband 2.2 abgelegt. Das Transportband 2.2 führt die gefüllte Form zu der Kühlzelle 9, wo der Roboter 4.2 die Form von dem Transportband 2.2 abnimmt und auf die Ablagen 5.1 auflegt. Insbesondere in Figur 2 ist ersichtlich, dass ebenfalls zwei benachbarte Ablagen 5.1 mit einem geraden Rohrstück die Form 1 aufnehmen, so dass auch in der Kühlzelle 9 fast die gesamte Form ohne Verdeckung dem Kühlmedium ausgesetzt ist. Die Schlitze 12 gewährleisten, dass die Form 1 nicht nur von oben, sondern auch von unten mit Kühlmedium beaufschlagt wird. Hierdurch findet ein sehr gleichmässiges und schnelles Abkühlen der Formen 1 bzw. des Verzehrguts in den Formen 1 statt.

Nach ausreichender Kühlung wird die Form wieder von dem Roboter 4.2 aus der Kühlzelle 9 entnommen und auf das Transportband 2.2 zur weiteren Verarbeitung gelegt.

**Bezugszeichenliste**

| | | | | | |
|---|---|---|---|---|---|
| 1 | Form | 34 | | | |
| 2 | Transportband | 35 | | | |
| 3 | Vorwärmzelle | 36 | | | |
| 4 | Roboter | 37 | | | |
| 5 | Ablagen | 38 | | | |
| 6 | Wand | 39 | | | |
| 7 | Aggregat | 40 | | | |
| 8 | Giessmaschine | 41 | | | |
| 9 | Kühlzelle | 42 | | | |
| 10 | Gehäuse | 43 | | | |
| 11 | Kühlaggregat | 44 | | | |
| 12 | Schlitze | 45 | | | |
| 13 | | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Anlage zum Herstellen von Verzehrgut, insbesondere von einem Schokoladenartikel, in zumindest einer Form (1), die vor und/oder nach dem Einfüllen des Verzehrgutes in zumindest einer Bearbeitungsstation (3, 8, 9) temperierbar ist, wobei die Form (1) in oder an der Bearbeitungsstation (3, 8, 9) von einem Roboter (4) übernommen und zum Temperieren abgelegt wird,
**dadurch gekennzeichnet,**
**dass** in der Bearbeitungsstation (3, 8, 9) einzelne, getrennte Ablagen (5) für die Formen (1) an einer Wand (6-6.3) vorgesehen sind, sich unterhalb und/oder oberhalb der Ablagen (5) in der Wand (6-6.3) Schlitze (12) zum Ausbringen eines Temperiermediums befinden und in den Ablagen (5) ein Temperiermedium geführt ist.

2. Anlage nach Anspruch 1, **dadurch gekennzeichnet, dass** die Ablagen (5) eine nur punkt- oder linienförmige Berührung mit den Formen (1) eingehen.

3. Anlage nach Anspruch 1 oder 2, **dadurch gekennzeichnet, dass** die Ablagen (5) U-förmig ausgebildet sind.

4. Anlage nach wenigstens einem der vorhergehenden Ansprüche, **dadurch gekennzeichnet, dass** die Ablagen (5) rohrförmig ausgebildet sind.

## Claims

1. Plant for producing foodstuff, in particular a chocolate article, in at least one mould (1) which can be tempered in at least one processing station (3, 8, 9) before and/or after the foodstuff is filled in, wherein the mould (1) being taken over in or at the processing station (3, 8, 9) by a robot (4) and being deposited for tempering,
**characterized in that**,
in the processing station (3, 8, 9) individual, separate trays (5) for the moulds (1) are provided on a wall (6 - 6.3), that slots (12) for dispensing a tempering medium are located below and/or above the trays (5) in the wall (6 - 6.3), and that a tempering medium is guided in the trays (5).

2. Plant according to claim 1, **characterized in that** the trays (5) only come into punctual or linear contact with the moulds (1).

3. Plant according to claim 1 or 2, **characterized in that** the trays (5) are U-shaped.

4. Plant according to at least one of the preceding claims, **characterized in that** the trays (5) are tubular.

## Revendications

1. Installation de production d'un aliment, en particulier d'un article en chocolat, dans au moins un moule (1) qui peut être thermorégulé dans au moins une station de traitement (3, 8, 9) avant et/ou après le remplissage de l'aliment, le moule (1) étant pris en charge par un robot (4) dans ou sur la station de traitement (3, 8, 9) et déposé pour être thermorégulé,
**caractérisée en ce**
**que**, dans la station de traitement (3, 8, 9), des étagères (5) individuelles séparées destinées aux moules (1) sont prévues sur une paroi (6-6.3), des fentes (12) permettant de distribuer un fluide de thermorégulation se trouvent en dessous et/ou au-dessus des étagères (5) dans la paroi (6-6.3) et un fluide de thermorégulation est guidé dans les étagères (5).

2. Installation selon la revendication 1, **caractérisée en ce que** les étagères (5) n'entrent en contact avec les moules (1) que sous forme de points ou de lignes.

3. Installation selon la revendication 1 ou 2, **caractérisée en ce que** les étagères (5) sont en forme de U.

4. Installation selon au moins l'une des revendications précédentes, **caractérisée en ce que** les étagères (5) sont tubulaires.
